# EUROPEAN PATENT SPECIFICATION

(11) **EP 2 208 696 B1**
(45) Date of publication and mention of the grant of the patent: **17.10.2012**
(21) Application number: 10150880.2
(22) Date of filing: 15.01.2010
(51) Int. Cl.: B65G 63/00, B61D 47/00

(54) **An apparatus for transferring a container**
Vorrichtung zum Umsetzen eines Behälters
Appareil pour le transfert d'un récipient

(30) Priority: 16.01.2009 EP 09150766
(43) Date of publication of application: 21.07.2010
(73) Proprietor: Ingenieursbureau Moderniek B.V., 3762 EV Soest (NL)
(72) Inventor: Nijmeijer, Johannes Jan, 3762 VC, Soest (NL)
(74) Representative: van Helden, Marinus

(56) References cited:
- EP-A1- 0 831 002
- EP-A2- 1 010 600
- WO-A1-93/04962
- WO-A1-96/17797
- WO-A1-02/088010
- DE-A1- 3 833 942
- DE-A1- 4 127 202
- DE-A1- 10 034 758
- JP-A- 57 077 113
- JP-A- 2008 056 001
- US-A- 5 186 596
- US-A1- 2008 073 872

## Description

The invention relates to an apparatus for transferring a container from a vehicle to a conveyor.

For luggage transport from airplanes to a luggage depot, containers which contain luggage pieces are transported by so-called dollys. In practice each dolly supports a container. Such a dolly is often provided with a bottom including a movable bottom surface. A dolly can be provided with a locking device for holding a container in a fixed position with respect to the dolly. The movable bottom surface of a dolly may be formed by freely rotatable rollers for easy displacement of the container in one direction, or balls for easy displacement in different directions. During transport of the dolly a bottom plate of the container is locked by the dolly such that the container has a fixed position with respect to the dolly. When the container has to be removed from the dolly the bottom plate of the container is unlocked with respect to the dolly such that the container can be easily displaced with respect to the dolly. For example, an operator can push the container from the dolly to a conveyor. The conveyor transports the container further, for example to a where the content of the container can be unloaded.

EP 0 831 002 discloses a device according to the preamble of claim 1 which has vertical lifting units constructed as lifting bridges engaging with a transportation container and fitted into the floor of a rail and road vehicle at right angles to the vehicle's longitudinal axis. A transverse stations gear is provided between the loading and unloading stations, and upon this is located the horizontal loading units with telescopic load support arms which are extendable horizontally and at right angles to the vehicle in the region of its floor.

The object of the invention is to provide an apparatus for transferring a container from a vehicle to a conveyor in a simple and safe way.

This object is achieved by the assembly according to claim 1.

An apparatus comprises a conveyor for conveying a container, a container displacing element being drivable with respect to the conveyor by a driving member in a displacement direction for displacing a container from a vehicle to the conveyor and in opposite direction thereof, wherein the container displacing element has a predefined basic position with respect to the driving member and is movable with respect to the driving member from said basic position in the displacement direction only.

In case of a dolly for transporting containers of an airplane the dolly can be driven to and parked at the apparatus, the container can be unlocked with respect to the dolly if a locking system is present and the container can be displaced in the displacement direction, which may be a substantially horizontal direction, from the dolly to the conveyor. Subsequently, the container can be transported by the conveyor, for example by manual pushing or driving a conveyor chain or belt.

The driving member can displace the container from a vehicle to the conveyor by driving the container displacing element in the displacement direction. During the displacement the container displacing element will exert a force on the container and the container displacing element keeps its basic position. When the container has been displaced, the driving member can move the container displacing element back in opposite direction. Under normal conditions the container displacing element is still in its predefined basic position. Since the container displacing element is movable with respect to the driving member it can displace in the displacement direction upon touching an object when it is moved back in opposite direction of the displacement direction. This avoids injuring of a person who may accidentally be present at the track that is followed by the container displacing element.

The container displacing element may also be displaceable with respect to the driving member in a direction extending horizontally and transversely with respect to the displacement direction. This further improves the safety of the apparatus in horizontal directions which deviate from the displacement direction.

The container displacing element may be connected to and suspend from the driving member and be pivotable with respect to the driving member in a direction beyond the basic position only, as seen in the displacement direction. The container displacing element is able to push against the container in the displacement direction. It is advantageous when the container displacing element suspends from the driving member under which the vehicle including the container may pass before parking the vehicle to remove the container. For example, the driving member may be guided along a horizontally oriented beam of a portal. In this case the displacing element may be a rod which suspends vertically in the basic position.

In a practical embodiment the driving member is a chain or a belt.

An alternative container displacing member may comprise a frame, a first arm and a second arm, the first arm being pivotable with respect to the frame about a first pivoting axis and the second arm being pivotable with respect to the first arm about a second pivoting axis extending substantially parallel to the first pivoting axis at a vertical distance, wherein a pushing element is fixed to the second arm at a distance from the second pivoting axis, and wherein the displacing member is adapted such that the pushing element displaces substantially horizontally upon activating the displacing member. The advantage of this embodiment is that the container displacing member is relatively compact in horizontal direction when the angle between the first arm and the second arm is small.

An alternative apparatus for transferring a container from a vehicle to a conveyor, comprises a conveyor for conveying a container, wherein the conveyor has a conveying direction and is provided with a conveyor supporting surface for supporting a container thereon. The apparatus further comprises a loading station where a container is displaceable to the conveyor in a displacement direction, and a container lifting device located at the loading station having a bearing surface for bearing a container thereon, which container lifting device is movable in vertical direction with respect to the conveyor between a lower position and an upper position in which the bearing surface extends above the lower position and the conveyor supporting surface. The apparatus is provided with detecting means for detecting the level of a bottom of a container on a vehicle or a container supporting surface of the vehicle at the loading station and control means for controlling the lifting device such that in its upper position the bearing surface extends at substantially the same level as the container bottom or the container supporting surface or slightly lower than that. The container supporting surface of the vehicle supports the container under operating conditions. The advantage of this embodiment is that the apparatus is independent from height variations of the container supporting surface of a vehicle, for example due to wear of the tyres of the vehicle. The container lifting device can be controlled manually or automatically by a controller. Due to these features the container lifting device can be positioned in the upper position in which the bearing surface is flush with the container supporting surface of the vehicle and the container can be displaced from the vehicle to the bearing surface. Subsequently, the container lifting device can be moved to its lower position in which the bearing surface is equal to or slightly lower than the conveyor supporting surface, in order to put the container on the supporting surface of the conveyor.

The detecting means may comprises an optical sensor, preferably a laser sensor mounted to the lifting device since this appears to function quickly and accurately. When the sensor detects the bottom of the container or the height of the container supporting surface of the dolly it may stop the lifting device immediately or after a time delay.

A part of the bearing surface may be drivable in substantially the displacement direction, because this provides the opportunity to displace the container easily from the vehicle to the conveyor at the loading station. The bearing surface may be formed by a conveyor, for example a roller conveyor, or a belt or a chain or the like.

The displacement direction may extend transversely with respect to the conveying direction. In a practical embodiment the conveyor comprises rollers which are rotatable about an axis of rotation extending transversely with respect to the conveying direction, and at least a part of the bearing surface is disposed between two adjacent rollers in the lower position of the container lifting device. The bearing surface may comprise a plurality of surfaces spaced from each other in the conveying direction. The rollers may be freely rollers on which a container rests in order to be displaced rather easily by manually pushing against it, for example, but derivable rollers are also conceivable.

Alternatively, the apparatus comprises a conveyor for conveying a container, wherein the conveyor has a conveying direction and is provided with a conveyor supporting surface for supporting a container thereon, a loading station where a container is displaceable to the conveyor in a displacement direction, a container lifting device located at the loading station having a bearing surface for bearing a container thereon, which container lifting device is movable in vertical direction with respect to the conveyor between a lower position and an upper position in which the bearing surface extends above the lower position and the conveyor supporting surface, wherein the apparatus is adapted such that under operating conditions the container is displaced in the displacement direction to a position above a portion of the bearing surface when the container lifting device is in its lower position and then the container lifting device is displaced to its upper position until the bearing surface substantially touches a lower side of the container, wherein the apparatus is provided with detecting means for detecting any contact between the bearing surface and the container wherein the detecting means preferably comprise a contact sensor.

The apparatus may be adapted such that upon touching the lower side of the container the container lifting is switched off. Once the container lifting device is device is switched off. Once the container lifting device is in its upper position the container can be displaced further in the displacement direction to the conveyor, for example by driving the bearing surface in that direction.

The invention relates to an assembly of a vehicle and an apparatus for transferring a container from a vehicle to a conveyor or from a conveyor to the vehicle, comprising a conveyor for conveying a container, a loading and/or unloading station where a container is displaceable to and/or or from the conveyor, respectively, in a displacement direction, a free space at the loading station for parking the vehicle including a container and/or a free space at the unloading station for parking the vehicle on which a container from the conveyor has to be placed, wherein the apparatus comprises an actuator for activating or de-activating a locking mechanism of the vehicle at the free activating a locking mechanism of the vehicle at free space which locks or de-locks a container with respect to the vehicle.

This is advantageous in case of dollys for transporting luggage containers at airports, which dollys are each provided with a locking mechanism for locking a bottom plate of a container placed on the dolly with respect to the dolly in order to fix a container to a dolly. The actuator will be designed in dependence of the locking mechanism of the vehicle. In practice a series of dollys including containers are driven to the loading station and the containers are removed therefrom sidewardly in the displacement direction, or a series of dollys without containers are driven to the unloading station and loaded one after one with a container which is supplied from the conveyor transversely with respect to the driving direction of the dollys. At the loading station each container is de-locked and at the unloading station each container is locked. position and an upper position in which the bearing surface extends above the lower position and the conveyer supporting surface, wherein the apparatus is provided with a positioning member for positioning a container on the conveyor at least in the conveying direction.

This provides the opportunity to align the container to be displaced transversely from the conveyor to a vehicle with respect to the position of that vehicle along the conveyor before the container is lifted and transferred from the bearing surface to the vehicle. The positioning member may be controlled such that it positions the container on the basis of the dimensions of the vehicle.

The apparatus for transferring a container from a vehicle to a conveyor or from a conveyor to a vehicle, comprises a conveyor for conveying a container, wherein the conveyor has a conveying direction and is provided with a conveyor supporting surface for supporting a container thereon, and a loading and/or unloading station where a container is displaceable to and/or from the conveyor respectively, in a displacement direction extending transversely with respect to the conveying direction. The apparatus also comprises an intermediate conveyor located at the loading and/or unloading station and having a conveying direction in the displacement direction, which intermediate conveyor is displaceable with respect to the conveyor in a direction extending transversely with respect to the displacement direction. The intermediate conveyor is provided with a container lifting device having a bearing surface for bearing a container thereon, which container lifting device is movable in vertical direction with respect to the conveyor between a lower position and an upper position in which the bearing surface extends above the lower position and the conveyor supporting surface. The apparatus comprises a free space next to the intermediate conveyor for parking a vehicle including a container and/or for parking a vehicle on which a container from the conveyor has to be placed. The free space is located at a side of the intermediate conveyor opposite to the conveyor as seen in the displacement direction.

The free space has a bottom boundary which is a portion of a road having a driving direction, which driving direction is substantially parallel to the conveying direction of the conveyor at the loading and/or unloading station, whereas the intermediate conveyor is displaceable substantially parallel to the conveyor, and between the conveyor and the free space as seen from above. In a practical embodiment the conveyor may have an elongated shape extending parallel to the portion of a road and the intermediate conveyor is movable along the conveyor between the road and the conveyor. The intermediate conveyor is able to receive a container at the loading station from a dolly and transfer the container to the conveyor in a direction which extends substantially perpendicular to the conveying direction of the conveyor. The intermediate conveyor is also able to receive a container at the unloading station from the conveyor and transfer the container to the dolly in a direction which extends substantially perpendicular to the conveying direction of the conveyor.

Preferably, the intermediate conveyor is provided with control means for detecting the location of a vehicle being parked at the free space and adjusting the position of the bearing surface with respect to the vehicle being parked at the free space.

In case of loading or unloading a dolly which is parked next to the intermediate conveyor, the intermediate conveyor may be moved along the dolly to align the dolly and the intermediate conveyor. The driver of the dolly or dollys may stop at a roughly indicated parking position at the free space whereas the intermediate conveyor can detect and move exactly to the correct location for receiving a container from the dolly at the loading station or transferring a container to the dolly at the unloading station.

The invention will be explained in more detail hereinafter with reference to drawings, which are very schematic representations of embodiments of the invention.
Fig. 1 is a schematic plan view of an embodiment of the apparatus according to the invention.
Fig. 2 is a schematic plan view and a side view of an embodiment of a displacing member.
Fig. 3 is a perspective view of a part of the apparatus indicated by III in Fig. 1.
Fig. 4 is a perspective view of a part of the apparatus indicated by IV in Fig. 1, but showing a slightly modified embodiment.
Fig. 5 is a schematic plan view of an alternative embodiment of the apparatus, and a side view of a container transporting member.
Fig. 6 are sectional views of the apparatus as seen along the line VI-VI in Fig. 4, illustrating successive positions of a pusher
Fig. 7 are plan views and a sectional view of a part of the apparatus indicated by VII in Fig. 1.
Fig. 8a are front views of an embodiment of a displacing member, showing different conditions thereof, and Fig. 8b is a side view of the embodiment.
Fig. 9a are plan views of an alternative embodiment of Fig. 7 showing different conditions and Fig. 9b is a similar view, illustrating a specific condition thereof.
Fig. 10 are top views of an embodiment of the apparatus according to the invention, showing the functioning of a positioning member.

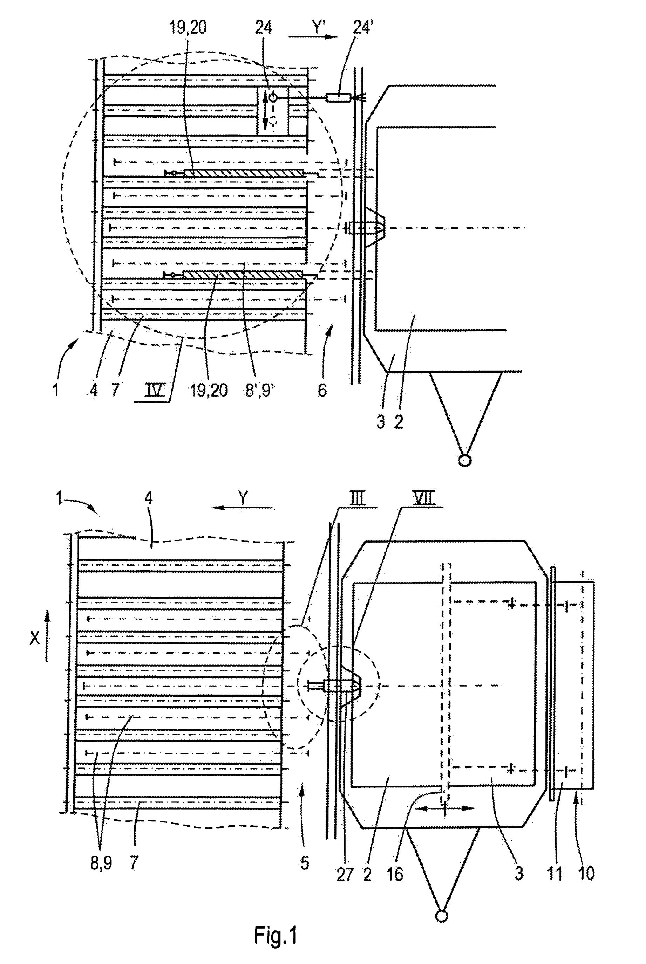

Fig. 1 shows an embodiment of an apparatus 1 which is suitable for transferring a container 2 from a vehicle or a dolly 3 to a conveyor 4 at a loading station 5 and for transferring a container 2 from the conveyor 4 to a dolly 3 at an unloading station 6. The conveyor 4 has a conveying direction X in which a container 3 can be transported to a next handling device (not shown), for example for emptying the content of the container 2. The conveyor 4 may be driven but it may also be provided with freely rotating wheels or rollers for easy manual displacement of a container 2 thereon. The conveyor 4 is provided with a conveyor supporting surface 7 for supporting a container 2 thereon. In the embodiment as shown in Fig. 1 the conveyor supporting surface 7 is formed by the upper surface of rollers which are rotatable about an axis of rotation extending substantially perpendicularly to the conveying direction X.

At the loading station 5 the container 2 is displaceable from the dolly 3 to the conveyor 4 in a displacement direction Y. In this embodiment the displacement direction Y at the loading station 5 extends perpendicularly to the conveying direction X.

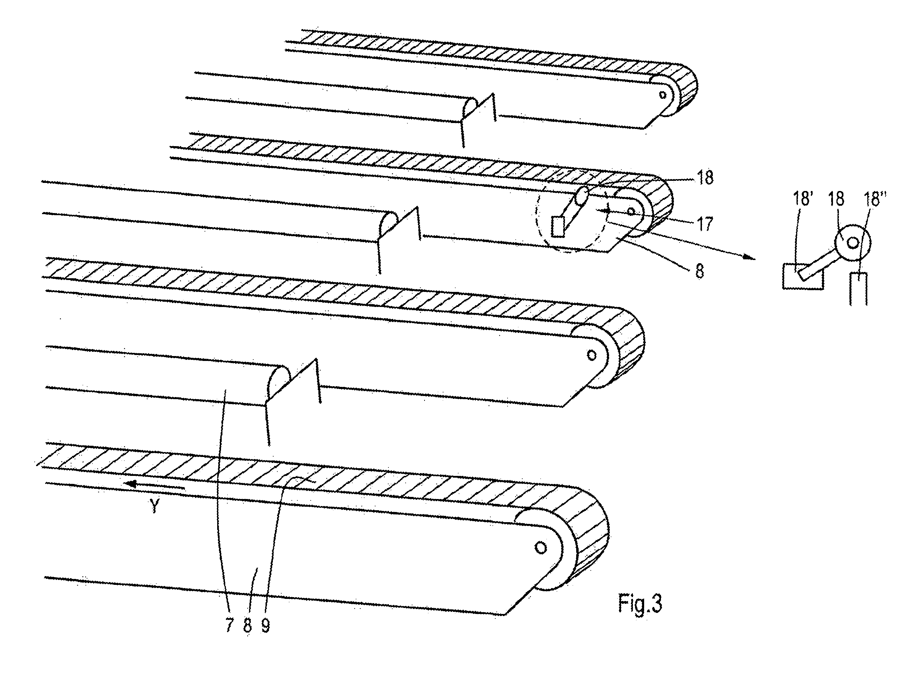

The apparatus 1 is provided with a container lifting device 8 at the loading station 5. The container lifting device 8 comprises a bearing surface 9 for bearing a container 2 thereon. The container lifting device 8 is movable in vertical direction with respect to the conveyor 4 between a lower position in which the bearing surface 9 extends below the conveyor supporting surface 7 or at the same level thereof, and an upper position in which the bearing surface 9 extends above the conveyor supporting surface 7. The bearing surface 9 is formed by an upper surface of chains disposed parallel with respect to each other. Each of the chains is located between two adjacent rollers of the conveyor 4. The width of the chains is smaller than the space between two adjacent rollers such that in the lower position of the container lifting device 8 the chains are located between two adjacent rollers. The chains are drivable in the displacement direction Y such that they can move a container 2 in that direction. Fig. 3 shows that the chains extend beyond the end of the conveyor supporting surface 7 as seen in opposite direction of the displacement direction Y. The container lifting device 8 according to Fig. 1 comprises five drivable parallel chains, but a larger or smaller number of chains is conceivable.

The embodiment of the apparatus 1 as shown in Fig. 1 also comprises a displacing member 10 at the loading station 5 for displacing a container 2 from a dolly 3 to the conveyor 4 in the displacement direction Y. In this embodiment the displacing member 10 is located at a distance from the conveyor 4 as seen in the displacement direction Y. This allows a dolly 3 including a container 2 to be driven parallel to the longitudinal axis of the conveyor 4 between the conveyor 4 and the displacing member 10. In practice, a series of dollys connected to each other and located behind each other will be driven along the conveyor 4, whereas the dollys are stopped at the loading station 5 and/or the unloading station 6.

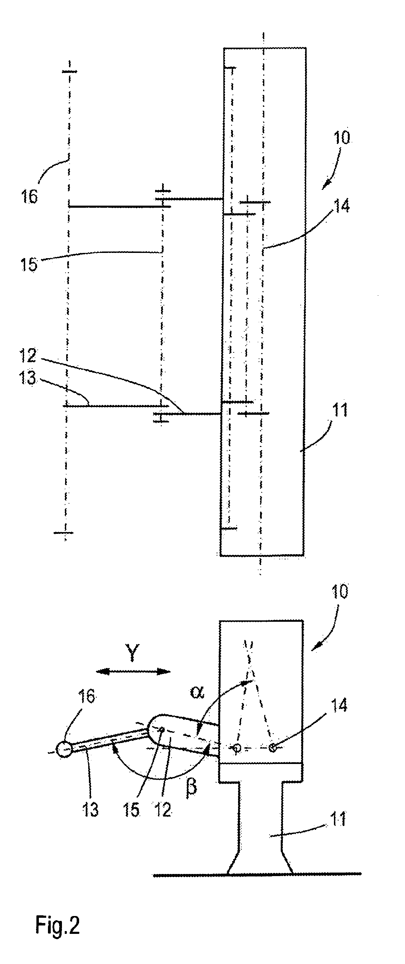

The displacing member 10 is shown in more detail in Fig. 2. The displacing member 10 comprises a frame 11, a first arm 12 and a second arm 13. The first arm 12 is pivotable with respect to the frame 11 about a first pivoting axis 14 and the second arm 13 is pivotable with respect to the first arm 12 about a second pivoting axis 15. The first and second pivoting axes extend substantially parallel to each other and are spaced with respect to each other in vertical direction. The displacing member 10 comprises a pushing element 16 which is fixed to the second arm 13 at a distance from the second pivoting axis 15. The displacing member 10 is adapted such that the pushing element 16 displaces substantially horizontally upon activating the displacing member 10. In a practical embodiment the displacing member 10 is configured such that the angle β as indicated in Fig. 2 is substantially twice the angle α when the pushing element 16 is at its furthest position with respect to the frame 11. Of course, alternative configurations of a displacing member 10 are conceivable.

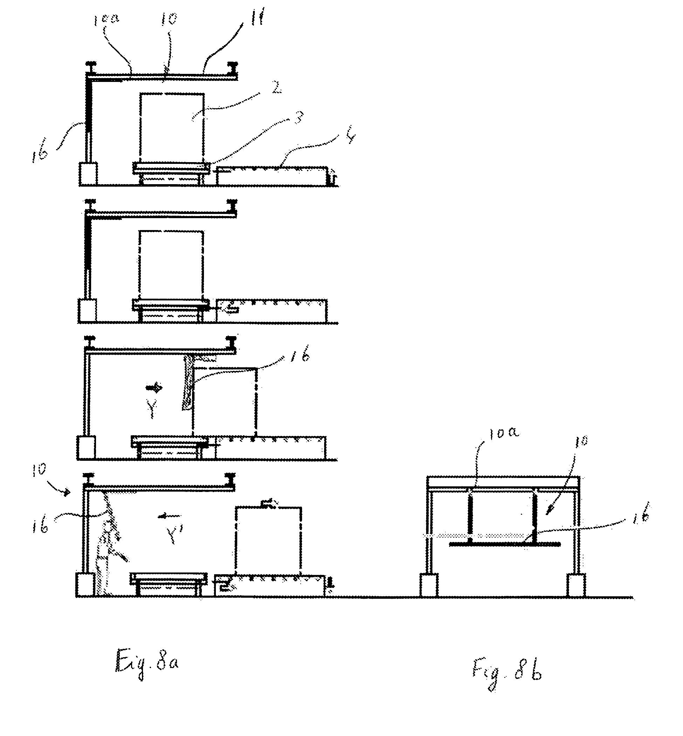

Fig. 8 shows in different views a part of an alternative embodiment of the displacing member 10. The front views of Fig. 8a illustrate the functioning of the embodiment for transferring the container 2 from the dolly 3 to the conveyor 4. In this case the conveyor 4 is adapted to transport the container 2 in the same direction as the displacement direction Y. The container lifting device 8 as described hereinbefore may be mounted to the conveyor as well. The displacing member 10 comprises a frame in the form of a portal 11. The height of the portal 11 allows a dolly 3 including a container to underpass the portal 11. This embodiment of the container displacing member 10 is provided with a container displacing element in the form of a rod 16 which is connected to a drive chain 10a and suspends from the drive chain 10a. The drive chain 10a is drivable with respect to the portal 11 along the horizontal beam thereof and the rod 16 is drivable by the drive chain 10a in the displacement direction Y and in opposite direction Y' thereof. The rod 16 has a predefined basic position with respect to the drive chain 10a, which means that the rod 16 is displaceable with the drive chain 10a synchronously to and from the conveyor 4 under normal conditions. Nevertheless, for safety reasons the rod 16 is movable with respect to the drive chain 10a from said basic position in the displacement direction Y only, which will be explained below.

In the three upper pictures of Fig. 8a it can be seen that the rod 16 displaces the container 2 from the dolly 3 to the conveyor 4 in the displacement direction Y whereas the basic position of the rod with respect to the drive chain 10a is maintained. The lower picture of Fig. 8a illustrates a situation in which the rod 16 is moved in opposite direction Y' after the container 2 has been displaced from the dolly 3 to the conveyor 4. Under normal conditions the rod 16 is still in its predefined basic position, but in the situation as shown in the lower picture a person is present at the track that is followed by the rod 16. Upon touching the person during moving back in the opposite direction Y' the rod 16 will pivot with respect to the chain 10a.

The side view of the displacing member 10 according to Fig. 8b shows that the rod 16 is also displaceable with respect to the drive chain 10a in a direction extending transversely with respect to the displacement direction Y. This improves the safety in case the dolly 3 with a container or another vehicle accidentally drives against the rod 16 in a direction transverse to the displacement direction Y. Fig. 8b illustrates the swinging of rod 16 in opposite directions.

It is noted that the displacing member 10 is not necessarily integrated in the apparatus 1 as described herebefore. It is possible to apply the displacing member 10 separately in a different apparatus.

Referring to the embodiment of the apparatus 1 according to Figs. 1-4 and 8, under operating conditions a dolly 3 including a container 2 thereon is driven to the loading station 5 and stopped between the conveyor 4 and the pushing element or rod 16. If the dolly 3 is provided with a locking mechanism which locks or de-locks a bottom plate of the container 2 so as to fix the container 2 with respect to the dolly 3, an actuator 27 can be controlled for de-activating the locking mechanism. Then, the displacing member 10 is activated such that the pushing element or rod 16 pushes the container 2 in the displacement direction Y to a position above a portion of the bearing surface 9 in which position the container 2 is still supported by the dolly 3, whereas the container lifting device 8 is still in its lower position.

Subsequently, the container lifting device 8 is displaced to its upper position until the bearing surface 9, or in this case the upper surface of the chains, touches a lower side of the container 2. The movement of the container lifting device 8 in upward direction is automatically stopped by means of a height level sensor 17, which is illustrated in Fig. 3. The height level sensor 17 comprises a touching element 18 which is hold up by a spring element 18'. The touching element 18 is rotatably and eccentrically coupled to the container lifting device 8. When the touching element 18 is moved downwards by the lower side of the container 2 due to lifting the container 2 by the container lifting device 8 it hits a contact sensor 18" after a certain displacement which results in a stop of the upward movement of the container lifting device 8. After that the chains of the container lifting device 8 are driven such that the bearing surface 9 and the container 2 are displaced in the displacement direction Y to the conveyor 4. At a predetermined location above the conveyor supporting surface 7 the chains are displaced downwardly so as to place the container 2 onto the rollers of the conveyor supporting surface 7.

In an alternative embodiment the apparatus 1 can be provided with an optical sensor for detecting the level of a container supporting surface of the dolly 3 when the container 2 is still on the dolly 3 at the loading station 5. The container 2 is supported by the container supporting surface of the dolly 3. The container lifting device 8 can be controlled such that the bearing surface 9 extends at substantially the same level as the container supporting surface or slightly lower than that before the container 2 is displaced to the container lifting device 8. The optical sensor may be a laser sensor and mounted to the lifting device 8.

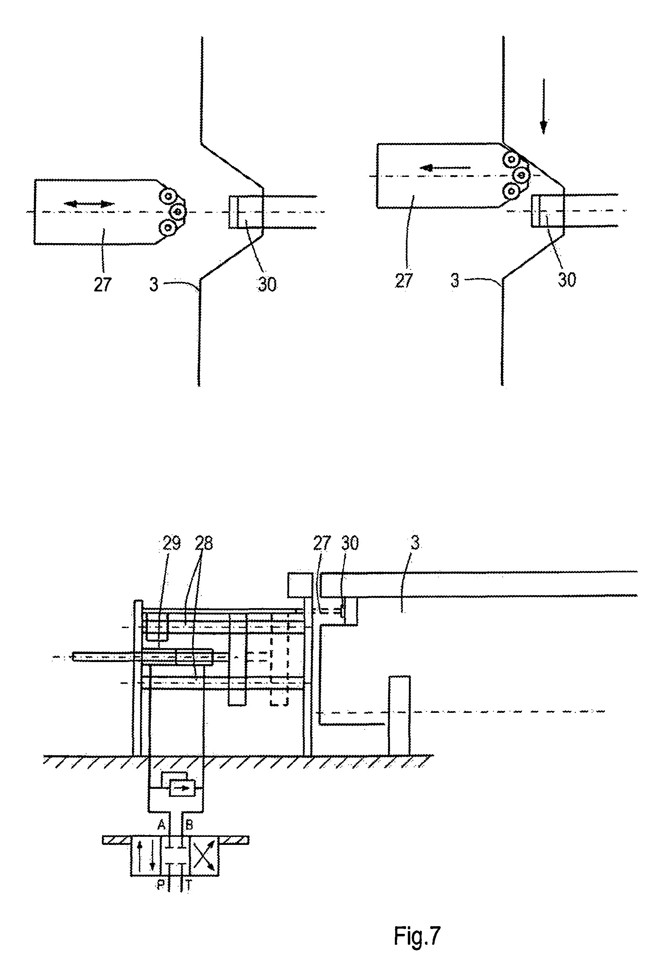

The actuator 27 for activating the locking mechanism of a dolly 3 is shown in more detail in Fig. 7. When the actuator 27, in this case a tapered plate, is pushed against a de-locking element 30 of the dolly 3, a container 2 on the dolly 3 will become freely movable with respect to the dolly 3. The actuator27 is guidable along two guiding shafts 28 extending parallel to each other. The actuator 27 is driven by a hydraulic piston 29 which is controlled such that upon exerting a back force on the actuator 27 above a predetermined level the piston 29 is forced in backward direction due to a controller which can reduce the pressure in an associated hydraulic pressure system. This provides the opportunity to push the actuator 27 away from the dolly 3 in case the dolly is driven away unintentionally. When the actuator 27 is pushed away it stays at that position. The tapered actuator and a correspondingly shaped hole at the dolly 3 facilitate removal of the actuator 27 from the hole. In addition to the shapes of the actuator 27 and the corresponding hole in the dolly 3, this movement may be further facilitated by applying rollers on the actuator 27 as shown in Fig. 7. When the actuator 27 is pushed away due to a displacement of the dolly 3 the locking mechanism of the dolly 3 will be locked automatically and a container 2 on the dolly 3 will be hold automatically. This is illustrated in the plan views of the actuator 27 in Fig. 7.

The hydraulic pressure system is adapted such that the stroke of the actuator 27 is variable such that its functioning is independent from the exact location of the parked dolly 3.

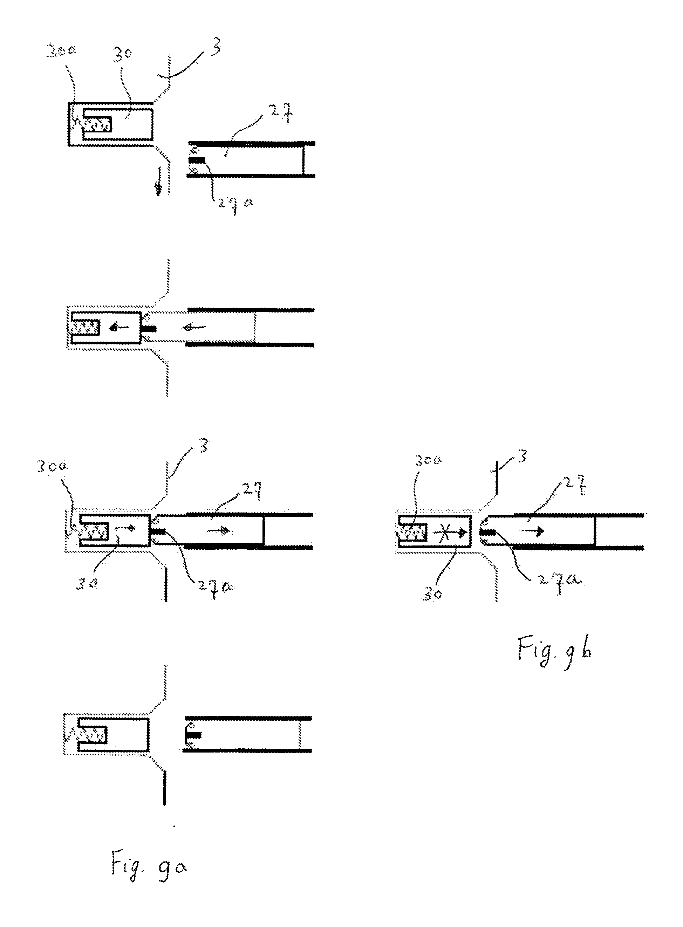

Fig. 9a illustrates a locking action and de-locking action from the upper to the lower picture by means of arrows. In this embodiment the actuator 27 comprises a sensor 27a for detecting a displacement of the de-locking element 30 of the vehicle 3. The sensor 27a is a touching sensor, which detects whether the actuator 27 contacts the de-locking element 30. Alternatively, the sensor 27a is a proximity switch. In the locking action as shown in the third picture from above in Fig. 9a it can be seen that the de-locking element 30 follows the displacement of the actuator 27 due to a spring 30a which acts on the de-locking element 30 with respect to a chassis of the dolly 3. During this movement the sensor detects a direct contact between the actuator 27 and the de-locking element 30, which means that the locking action develops successfully. However, in the condition as illustrated in Fig. 9b the de-locking element 30 sticks to the chassis of the dolly 3 and does not move outwardly together with the actuator 27. This is detected by the sensor 27, which can raise an alert. This improves the safety conditions since in this case the actuator 27 is activated correctly but the container is not fixed with respect to the dolly 3 yet.

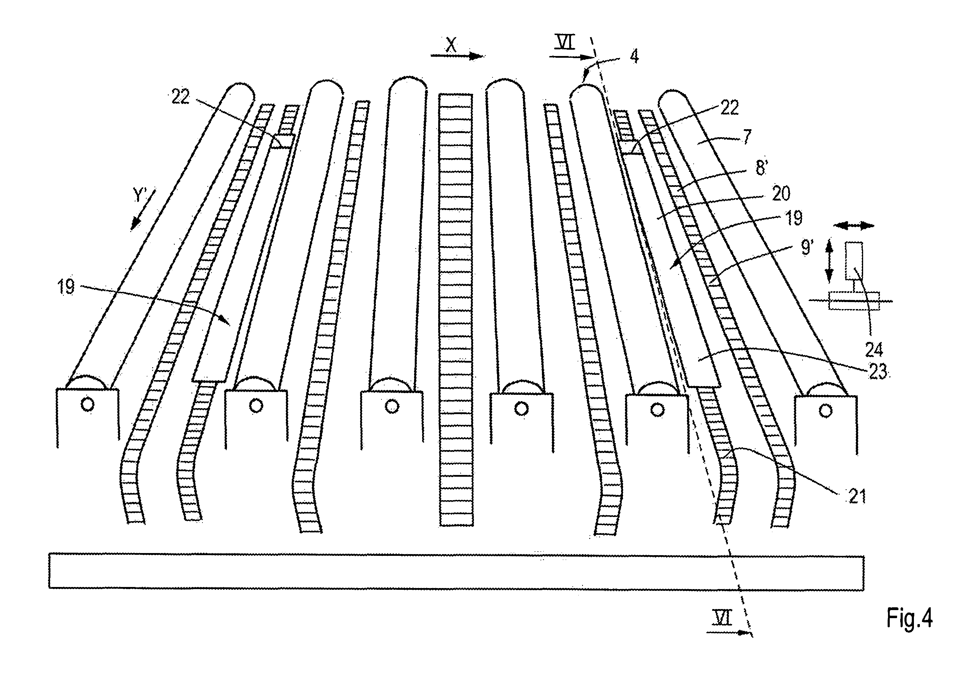

Referring to Fig. 1, the unloading station 6 looks like similar to the loading station 5. At the unloading station 6 the container 2 is displaceable from the conveyor 4 to the dolly 3 in the displacement direction which is indicated by Y' in Fig. 1 and 4 which is opposite to the displacement direction Y. For example, an empty container 2 coming from an unloading apparatus (not shown) may be transported by the conveyor 4 to the unloading station 6 and transferred to the dolly 3.

At the unloading station 6 the apparatus 1 is also provided with a container lifting device 8' including a bearing surface 9' for bearing a container 2 thereon. The container lifting device 8' is movable in vertical direction with respect to the conveyor 4 between a lower position in which the bearing surface 9' extends below the conveyor supporting surface 7 or at the same level thereof, and an upper position in which the bearing surface 9' extends above the conveyor supporting surface 7. In the embodiment as shown in Fig. 1 the bearing surface 9' is also formed by an upper surface of chains disposed parallel with respect to each other and each of the chains is located between two adjacent rollers of the conveyor 4.

In this case the container 2 which is resting on the conveyor supporting surface 7 at the unloading station 6 can be transferred to the dolly 3 by first lifting the container 2 by the container lifting device 8' from the conveyor supporting surface 7, then displacing the container 2 in the displacement direction Y' to the dolly 3 by driving the chains. The bearing surface 9' will be lifted to a height level such that it is equal to the bottom level of the dolly 3 on which the container 2 has to be placed, or slightly higher than that. At a certain moment the container 2 will leave the bearing surface 9' and be supported by the dolly 3. However, since the chains are not allowed to touch the dolly 3 it may be desired to push the container 2 further in the displacement direction Y' than is possible by means of the chains. For that reason the apparatus 1 is provided with pushers 19 which make it possible to push the container 2 to its final position on the dolly 3.

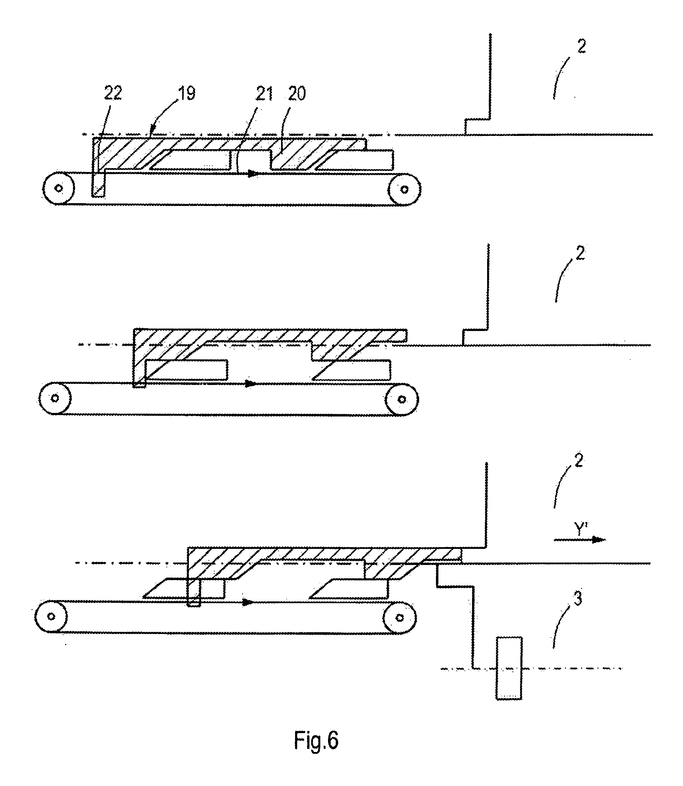

In the embodiment of Fig. 4 (which is slightly different from the embodiment of Fig. 1) there are two pushers 19, which are movable in the displacement direction Y' beyond an end of the bearing surface 9' as seen in the displacement direction Y'. Each pusher 19 comprises a plate 20 which is fixed to a chain 21 at a fixing location 22 which is spaced from an end portion 23 of the plate 20 as seen in opposite direction of the displacement direction Y', whereas the end portion 23 is free from the chain 21, When the chain 21 is moved in the displacement direction Y' the end portion 23 passes the end of the bearing surface 9' as seen in the displacement direction Y'. The pusher 19 is also movable in vertical direction because it is fixed to the container lifting device 8' in this embodiment. At a lower position it is disposed below the conveyor supporting surface 7 and bearing surface 9' and at an upper position it is disposed at least above the conveyor supporting surface 7 and preferably above the bearing surface 9' so as to be able to push against a side bottom portion of the container 2. In the embodiment as shown in Fig. 4 the pusher 19 is automatically moved upwardly above bearing surface 9' upon moving it in the displacement direction Y', see Fig. 6. This is achieved by guides which direct the pusher 19 upwardly in the displacement direction Y'. It can be seen in Fig. 6 that the pusher 19 touches a side bottom portion of the container 2 upon movement in the displacement direction Y' and subsequently pushes the container 2 further on the dolly 3.

Furthermore, Figs. 1 and 4 show a positioning member 24 for positioning a container 2 on the conveyor supporting surface 7 at the unloading station 6. The positioning member 24 is provided, for correctly aligning the container 2 on the conveyor 4 with respect to the dolly 3 on which it must be placed. Under operating conditions a movable sensor 24'(see Fig.1) detects the position of an empty dolly 3 with respect to the conveyor 4 at the unloading station 6. Upon the signal from the sensor 24' the positioning member 24 is moved upwardly above the conveyor supporting surface 7 and in the conveying direction X such that an approaching container 2 on the conveyor 4 is stopped at a position which corresponds to the position of the dolly 3 next to the conveyor 4.

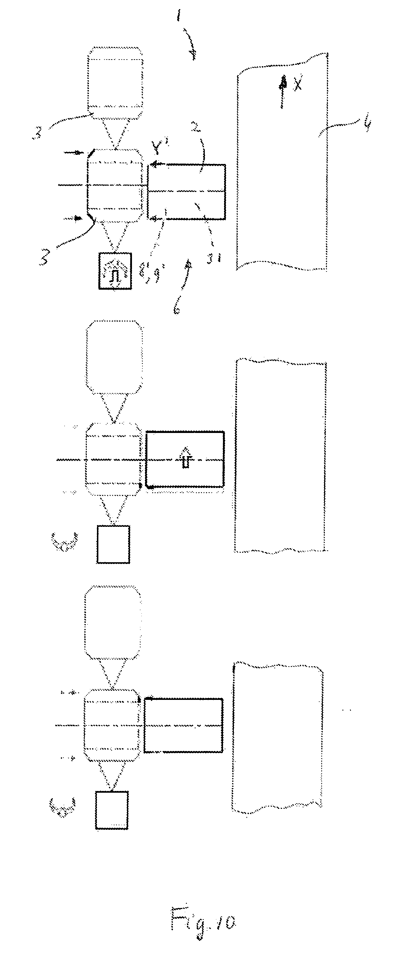

Fig.10 shows an alternative embodiment of the apparatus 1 for transferring a container 2 from a dolly 3 to a conveyor 4 or from a conveyor 4 to a dolly 3. In Fig. 10 only the unloading station 6 is shown, where the container 2 is displaceable from the conveyor 4 to the dolly 3. The apparatus 1 comprises an intermediate conveyor 31 for conveying containers 2 from the conveyor 4 to the dollys 3. The conveyor 4 has a conveying direction X and the intermediate conveyor 31 has a conveying direction or a displacement direction Y'. The intermediate conveyor 31 is displaceable with respect to the conveyor 4 in a direction extending transversely with respect to the displacement direction Y', which is in this case substantially parallel to the conveying direction X and a driving direction of the dollys 3. The apparatus 1 also comprises a free space next to the intermediate conveyor 31 for parking the dolly 3 on which the container 2 from the conveyor 4 has to be placed via the intermediate conveyor 31. The free space is located at a side of the intermediate conveyor 31 opposite to the conveyor 4 as seen in the displacement direction. Fig. 10 shows that at the free space a series of dollys 3 is parked and a container 2 is transferred to a first dolly 3. The dollys 3 are parked on a portion of a road which extends parallel to the conveyor 4. The embodiment of the intermediate conveyor 31 may also comprise a container lifting device 8' having a bearing surface 9' for bearing the container 2 thereon, such as in the embodiments as described hereinbefore. When a dolly 3 is parked next to the intermediate conveyor 31 as shown in the upper picture of Fig. 10 the intermediate conveyor 31 can detect the position of the dolly 3 and can be displaced such that the container 2 is correctly aligned with the dolly 3 as illustrated in the middle picture of Fig. 10. This means that a driver of the dollys 3 does not have to park a dolly 3 very accurately next to the intermediate conveyor 31. It is noted that the intermediate conveyor 31 is also applicable at a loading station 5 where the container 2 is displaced from the dolly to the intermediate conveyor 31. It is noted that the intermediate conveyor 31 is freely movable along the dolly3 and does not have fixed loading or unloading positions with respect to the conveyor 4.

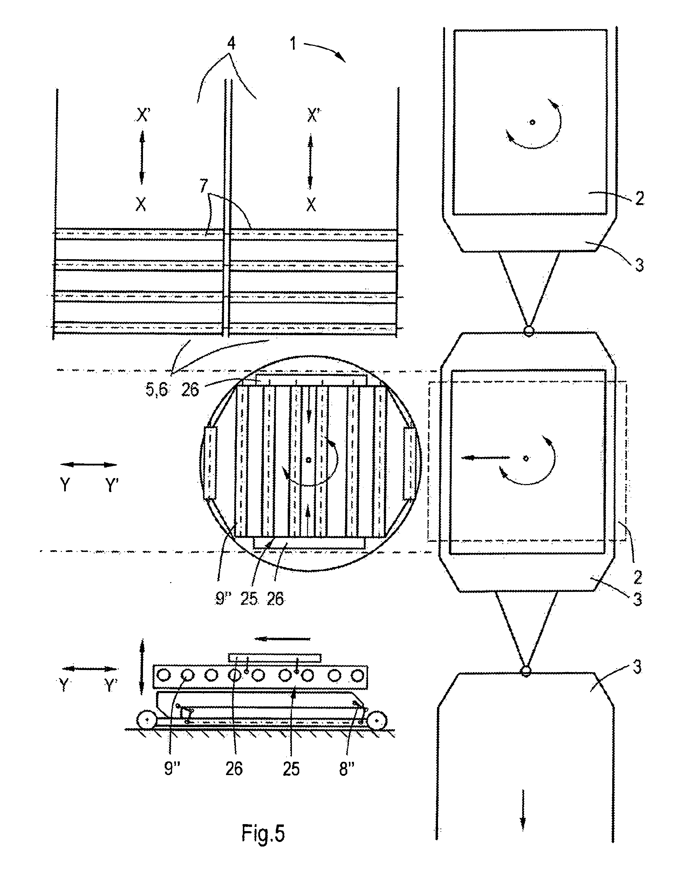

Fig. 5 shows an alternative embodiment of an apparatus 1 for transferring a container 2 from a dolly 3 to a conveyor 4 or from a conveyor 4 to a dolly 3. In the embodiment as shown the apparatus 1 has two conveyors 4 and each of the conveyors 4 has a conveying direction X or X'. The apparatus 1 is provided with a drivable container transporting member 25 for transporting a container 2 between the loading station 5 or the unloading station 6 and the dolly 3 in the displacement direction Y or Y'. In this case the displacement directions Y, Y' extend perpendicularly to the conveying directions X, X', but alternative mutual angles are conceivable, as well.

The container transporting member 25 is provided with a container lifting device 8" having a bearing surface 9" for bearing a container 2 thereon. The container lifting device 8" is movable in vertical direction with respect to the conveyor 4 between a first position and a second position. In the first position the bearing surface 9" extends above the conveyor supporting surface 7 or at the same level thereof. The bearing surface 9" is formed by rollers which are freely movable, or drivable in at least one direction. The second position is spaced from the first position and may be lower or higher than the first position, depending on the height of the bottom of a dolly 3 on which a container 2 is placed.

In the condition as shown in Fig. 5 the container 2 is rotated 90° on the dolly 2 and then pushed in the displacement direction Y onto the bearing surface 9", which is set at a height level matching with a bottom of the dolly 3. It is noted that in practice the dolly 3 may be provided with a bottom for supporting a container 2 which can be revolved about an axis extending upwardly. Subsequently, the container transporting member 25 is moved in the displacement direction Y to the loading station 5. The bearing surface 9" can be revolved about a revolving axis extending upwardly. In the embodiment as shown in Fig. 5 the bearing surface 9" is rotated 90 ° at the loading station 5 as indicated by an arrow. After rotation the direction in which the container is displaceable on the container transporting member 25 substantially coincides with the conveying direction X, X'. Then the container 2 can be displaced from the container transporting member 25 to the conveyor 4 in the conveying direction X. If desired the bearing surface 9" can be moved upwardly or downwardly in order to match the height levels of the conveyor supporting surface 7 and the bearing surface 9" of the container transporting member 25.

Furthermore, the container transporting member 25 is provided with centring members 26 for centring the container 2 on the bearing surface 9", The centring members 26 may also hold a container 2 on the container transporting member 25 during transport.

When a container 2 has to be transferred from the conveyor 2 to a dolly 3 in the embodiment according to Fig. 5 the order of container handling occurs in opposite sequence.

From the foregoing, it will be clear that the invention provides an apparatus for transferring a container from a vehicle to a conveyor or from a conveyor to a vehicle in a simple, efficient and safe way.

The invention is not limited to the embodiments shown in the figures, which can be varied in several ways within the scope of the invention as claimed. It as claimed is for example possible that the containers may have alternative shapes, for example palletized articles.

## Claims

1. An assembly of a vehicle and an apparatus (1) for transferring a container (2) from the vehicle (3) to a conveyor (4) or from a conveyor (4) to the vehicle (3), the apparatus comprising
a conveyor (4) for conveying a container (2),
a loading (5) and/or unloading station (6) where a container (2) is displaceable to and/or or from the conveyor (4), respectively, in a displacement direction (Y, Y'),
a free space at the loading station (5) for parking the vehicle (3) including a container (2) and/or a free space next at the unloading station (6) for parking the vehicle (3) on which a container from the conveyor (4) has to be placed,
wherein the vehicle (3) comprises a locking mechanism for locking or de-locking a container (2) with respect to the vehicle (3), **characterised in that**
the apparatus (1) comprises an actuator (27) for activating or de-activating the locking mechanism when the vehicle (3) is at the free space.

2. An assembly according to claim 1, wherein the actuator comprises a tapered element (27) which is movable in the displacement direction (Y, Y'), wherein the tapered element (27) is preferably provided with at least a roller for contacting the vehicle upon a de-locking action, which roller is freely rotatable about an axis of rotation extending transversely with respect to the displacement direction (Y, Y').

3. An assembly according to claim 1 or 2, wherein the actuator (27) comprises a sensor (27a) for detecting a displacement of a corresponding counter part (30) of the locking mechanism of the vehicle (3) upon activating the actuator, wherein the sensor is preferably a touching sensor (27a) or a proximity switch.

4. An assembly according to one of the preceding claims, wherein the actuator (27) is driven by a hydraulic pressure system which is controlled such that its pressure is reduced upon exerting an external force onto the actuator (27) exceeding a predetermined level.

5. An assembly according to claim 4, wherein the hydraulic pressure system is adapted such that the stroke of the actuator (27) is variable such that its functioning is independent from the exact location of the vehicle (3) with respect to the apparatus (1).

## Patentansprüche

1. Anordnung aus einem Fahrzeug und einer Vorrichtung (1) zum Umsetzen eines Behälters (2) vom Fahrzeug (3) auf einen Förderer (4) oder von einem Förderer (4) auf das Fahrzeug (3), wobei die Vorrichtung aufweist:
einen Förderer (4) zum Fördern eines Behälters (2),
eine Belade- (5) und/oder Entladestation (6), wobei ein Behälter (2) auf den Förderer (4) und/oder von ihm jeweils in einer Verschieberichtung (Y, Y') verschiebbar ist,
einen freien Raum an der Beladestation (5) zum Parken des Fahrzeugs (3) mit dem Behälter (2) und/oder einen freien Raum neben der Entladestation (6) zum Parken des Fahrzeugs (3), auf dem ein Behälter vom Förderer (4) zu platzieren ist,
wobei das Fahrzeug (3) einen Verriegelungsmechanismus zum Verriegeln oder Entriegeln eines Behälters (2) im Hinblick auf das Fahrzeug (3) aufweist, **dadurch gekennzeichnet, dass**
die Vorrichtung (1) ein Stellglied (27) zum Aktivieren oder Deaktivieren des Verriegelungsmechanismus aufweist,
wenn sich das Fahrzeug (3) am freien Raum befindet.

2. Anordnung nach Anspruch 1, wobei das Stellglied ein zulaufendes Element (27) aufweist, das in Verschieberichtung (Y, Y') beweglich ist, wobei das zulaufende Element (27) vorzugsweise mit mindestens einer Rolle zum Kontaktieren des Fahrzeugs bei einem Entriegelungsvorgang versehen ist, wobei die Rolle um eine Drehachse frei drehbar ist, die sich im Hinblick auf die Verschieberichtung (Y, Y') quer erstreckt.

3. Anordnung nach Anspruch 1 oder 2, wobei das Stellglied (27) einen Sensor (27a) zum Detektieren einer Verschiebung eines entsprechenden Gegenstücks (30) des Verriegelungsmechanismus des Fahrzeugs (3) bei Aktivieren des Stellglieds aufweist, wobei der Sensor vorzugsweise ein Berührungssensor (27a) oder ein Näherungsschalter ist.

4. Anordnung nach einem der vorstehenden Ansprüche, wobei das Stellglied (27) durch ein hydraulisches Drucksystem angetrieben wird, das so gesteuert wird, dass sein Druck bei Ausüben einer einen vorbestimmten Wert überschreitenden Außenkraft auf das Stellglied (27) reduziert wird.

5. Anordnung nach Anspruch 4, wobei das hydraulische Drucksystem so angepasst ist, dass der Hub des Stellglieds (27) variabel ist, so dass sein Funktionieren vom genauen Standort des Fahrzeugs (3) im Hinblick auf die Vorrichtung (1) unabhängig ist.

## Revendications

1. Ensemble d'un véhicule et d'un appareil (1) pour transférer un conteneur (2) du véhicule (3) à un transporteur (4) ou d'un transporteur (4) au véhicule (3), l'appareil comprenant :
un transporteur (4) pour transporter un conteneur (2),
un poste de chargement (5) et/ou un poste de déchargement (6) où un conteneur (2) est déplaçable jusqu'au transporteur (4), et/ou à partir de celui-ci, respectivement,
dans une direction de déplacement (Y, Y'),
un espace libre au poste de chargement (5) pour garer le véhicule (3) comprenant un conteneur (2) et/ou un espace libre à côté du poste de déchargement (6) pour garer le véhicule (3) sur lequel un conteneur à partir du transporteur (4) doit être positionné,
dans lequel le véhicule (3) comprend un mécanisme de verrouillage pour verrouiller ou déverrouiller un conteneur (2) par rapport au véhicule (3), **caractérisé en ce que** l'appareil (1) comprend un actionneur (27) pour activer ou désactiver le mécanisme de verrouillage lorsque le véhicule (3) est dans l'espace libre.

2. Ensemble selon la revendication 1, dans lequel l'actionneur comprend un élément tronconique (27) qui est mobile dans la direction de déplacement (Y, Y'), dans lequel l'élément tronconique (27) est de préférence pourvu d'au moins un rouleau pour entrer en contact avec le véhicule lors d'une action de déverrouillage, lequel rouleau est librement rotatif autour d'un axe de rotation s'étendant transversalement par rapport à la direction de déplacement (Y, Y').

3. Ensemble selon la revendication 1 ou 2, dans lequel l'actionneur (27) comprend un capteur (27a) pour détecter un déplacement d'une contrepartie correspondante (30) du mécanisme de verrouillage du véhicule (3) lors de l'actionnement de l'actionneur, dans lequel le capteur est de préférence un capteur tactile (27a) ou un détecteur de proximité.

4. Ensemble selon une des revendications précédentes, dans lequel l'actionneur (27) est entraîné par un système à pression hydraulique qui est commandé de sorte que sa pression soit réduite lors de l'exercice d'une force externe sur l'actionneur (27) dépassant un niveau prédéterminé.

5. Ensemble selon la revendication 4, dans lequel le système à pression hydraulique est adapté de sorte que la course de l'actionneur (27) soit variable de sorte que son fonctionnement soit indépendant de l'emplacement exact du véhicule (3) par rapport à l'appareil (1).
